# FASCICULE DE BREVET EUROPEEN

(11) **EP 0 656 679 B1**
(45) Date de publication et mention de la délivrance du brevet: **04.03.1998**
(21) Numéro de dépôt: 94830551.1
(22) Date de dépôt: 25.11.1994
(51) Int. Cl.: H02K 1/00, H02K 1/32, H02K 9/06

(54) **Petit moteur électrique, refroidi par un flux d'air passant à travers le rotor**
Elektrischer Kleinmotor, gekühlt mittels einer durch den Rotor fliessenden Luftstrom
Small electric motor, cooled by air flowing through the rotor

(30) Priorité: 03.12.1993 IT AN930066
(43) Date de publication de la demande: 07.06.1995
(73) Titulaire: L.N. di NATALINI LINO & C. - S.r.l., I-62010 Montecassiano (MC) (IT)
(72) Inventeur: Natalini, Lino,, Macerata (IT); Porto, Rodolfo Alberto, Camerano (AN) (IT)
(74) Mandataire: Baldi, Claudio

(56) Documents cités:
- DE-A- 1 488 451
- FR-A- 1 404 940
- GB-A- 706 170
- US-A- 5 144 175

## Description

La présente invention a pour objet un petit moteur électrique, refroidi par un flux d'air passant à travers le rotor qui fonctionne également en tant que partie mobile pour l'aspiration de l'air.

Le moteur électrique en question est du type communément dénommé à induction: il est asynchrone, doté de deux pôles et nécessite d'une alimentation monophasée.

Tant le stator que le rotor sont constitués d'un paquet de lamelles en fer; sur le stator est prévu le dispositif d'enroulement inducteur qui se prolonge le long d'un tronçon du stator même, ayant une structure annulaire, au centre de laquelle il y a le rotor.

Jusqu'à maintenant, le refroidissement de tels petits moteurs électriques s'effectuait par le biais d'une hélice d'aspiration, calée sur l'arbre du moteur, hélice provoquant un courant d'air qui cingle et enveloppe le rotor et le voisinant stator.

Le brevet FR-A-1404940 décrit un moteur électrique refroidi par un flux d'air qui investit le rotor, ce dernier présentant une série de conduits longitudinaux passants où l'air est poussé par un ventilateur positionné à l'extérieur de la carcasse qui, d'un côté aspire de l'air depuis l'intérieur de la carcasse à travers des ouvertures prévues à cet effet sur le fond de la carcasse et, de l'autre, réintroduit de l'air forcé à l'intérieur de la carcasse à travers des ouvertures prévues à cet effet sur les parois latérales de la carcasse même.

Des ailettes de ventilation, aptes à créer des turbulences à l'intérieur de la carcasse, sont appliquées sur le rotor.

On ne peut pas considérer tout à fait satisfaisant le degré de refroidissement obtenu par le biais de cette hélice, surtout en correspondance du rotor où la perte de chaleur s'effectue plus difficilement à cause de la surface d'échange réduite, mais encore plus à cause du débit d'air modéré qui traverse l'entrefer.

Le but de la présente invention est celui d'améliorer le système de refroidissement des précités petits moteurs électriques à induction, en faisant passer l'air de refroidissement à travers le corps du rotor.

Un autre but de l'invention est celui d'augmenter le débit d'air de refroidissement à travers le moteur en créant un courant d'air supplémentaire qui se superpose à celui généré par l'hélice d'aspiration commune ; courant dont une portion passe à travers le rotor même, tandis que la portion restante est centrifugée vers un parcours périmétral qui enveloppe tant le rotor que le stator. L'invention propose à cet effet un petit moteur électrique tel que défini à la revendication 1.

Pour créer ce flux d'air supplémentaire, on a pensé de doter le rotor de petites pales radiales, en mesure d'effectuer une action aspirante équivalente à celle effectuée par la partie mobile d'un ventilateur centrifuge.

Dans cette perspective, le rotor a été renfermé dans un boîtier cylindrique formé de deux demi-coques en forme de "U", qui détermine la formation d'un conduit annulaire, en fait un canal diffuseur proprement dit, à l'extérieur des petites pales radiales prévues sur le rotor.

Sur la partie supérieure dudit boîtier sont prévues des fentes centrales à travers lesquelles l'air extérieur est aspiré à l'intérieur du boîtier par les petites pales radiales qui tournent solidairement au rotor.

La masse d'air aspirée par le rotor-partie mobile est en partie centrifugée dans le précité conduit annulaire qui la décharge de manière périphérique en l'envoyant, également à l'aide d'un couvercle déflecteur sur le dispositif d'enroulement du stator.

La portion restante de l'air aspiré, au contraire, tend à se canaliser dans des canaux longitudinaux réalisés à cet effet sur le corps du rotor; cette portion d'air aspiré y étant attiré sur le rotor même par l'hélice d'aspiration, mais surtout par une autre série de petites pales radiales prévues de l'autre côté du rotor, c'est à dire celles situées juste devant l'hélice d'aspiration.

En définitive, le rotor du petit moteur selon l'idée est doté, tant sur la partie supérieure que sur celle inférieure, d'une série de petites pales radiales qui forment respectivement deux parties mobiles, l'une étant située au-dessus et l'autre au-dessous du rotor: la première étant préposée à aspirer l'air externe, à travers les fentes prévues sur le boîtier, pour ensuite en pousser une partie vers le rotor et une autre partie vers le stator; la deuxième étant préposée à favoriser le flux d'air le long des conduits qui traversent longitudinalement le corps du rotor.

La création de ce courant d'air qui cingle et traverse le rotor de manière axiale assure non seulement un meilleur refroidissement du moteur (rotor + stator), mais également celui des deux roulements à billes qui supportent le petit arbre.

Toujours dans le but de diminuer au maximum le réchauffement de ces deux roulements à billes, on fixe le stator sur la relative demi-coque du boîtier de support - sur laquelle sont également réalisés les sièges des roulements à billes - en intercalant des gaines réalisées en isolant thermique, de manière à éviter ainsi que les parois dudit boîtier puissent constituer, comme c'est le cas actuellement, le moyen de conduction à travers lequel la chaleur dégagée par le stator peut atteindre les roulements à billes qui supportent le petit arbre.

Pour une meilleure explication, la description de l'idée se poursuit en faisant référence aux tableaux de dessins annexés indiqués à titre d'illustration non limitative et où:
- la fig. 1 est une vue du haut du petit moteur selon l'idée, avec l'enlèvement partiel de la précitée demi-coque du boîtier en forme de "U", de manière à mettre en évidence le flux d'air à travers le rotor sous-jacent;
- la fig. 2 est la section de la fig. 1 avec le plan II-II de la fig. 1;
- la fig. 3 est le rotor vu du haut;
- la fig. 4 est la section du rotor avec le plan IV-IV de la fig. 3;
- la fig. 5 est la section du rotor avec le plan V-V de la fig. 4.

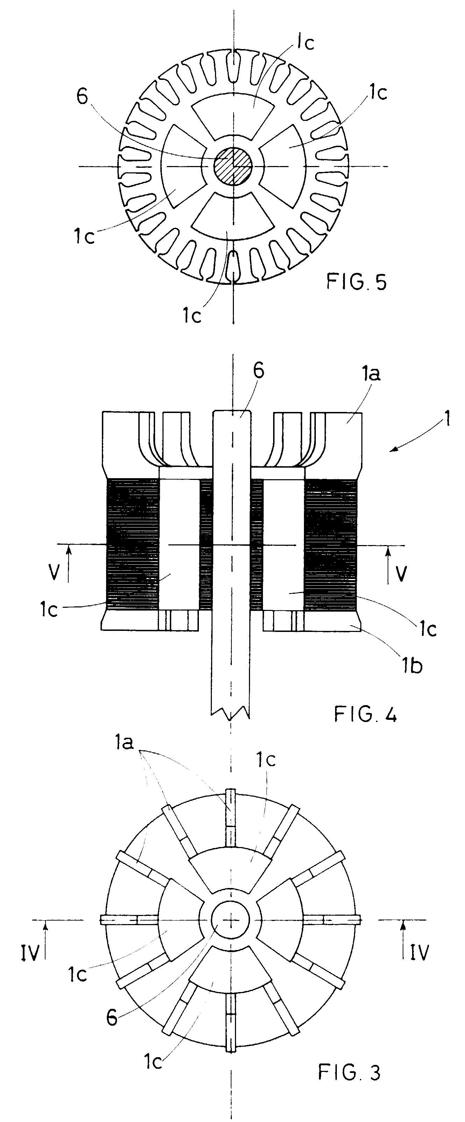

Référence les fig. 3, 4 et 5, le rotor (1) utilisé dans le moteur selon l'idée résulte doté d'une première série annulaire de petites pales radiales (1a), sur la partie supérieure et d'une deuxième série de petites pales annulaires et radiales (1b) sur la partie inférieure, les deux formant respectivement deux parties mobiles centrifuges, l'une étant située au-dessus et l'autre au-dessous du rotor (1).

Le rotor (1) résulte renfermé dans un boîtier cylindrique en forme de "U" (3), réalisé par le couplage des deux demi-coques circulaires, l'une superposée à l'autre.

Ledit boîtier cylindrique (3) a un diamètre en mesure de créer, tout autour de la série de petites pales radiales supérieures (1a), un conduit annulaire (4) de section constante, dont l'embouchure de sortie (4a) débouche dans un vaste canal (5a) délimité par un couvercle en forme de boîte (5) qui enveloppe partiellement le dispositif d'enroulement (2a) du stator (2).

On souligne le fait que ledit conduit annulaire (4) est bouché par une cloison transversale (4b) située immédiatement en aval de l'embouchure de sortie (4a), de manière à faire fonctionner le précité conduit (4) pareillement au diffuseur à vis d'un ventilateur centrifuge.

Le corps du rotor (1) est en outre traversé par une série de conduits passants (1c) qui se prolongent en direction longitudinale, préférablement de manière parallèle au petit arbre (6) enfilé au centre du rotor (1).

La demi-coque inférieure du précité boîtier (3) est dotée sur sa partie inférieure d'une bride de fixation (3a), à l'externe de laquelle il y a la commune hélice d'aspiration (7) qui, avec son action aspirante, extrait de l'interne du boîtier (3) l'air surchauffé passé à travers le rotor (1) et l'entrefer.

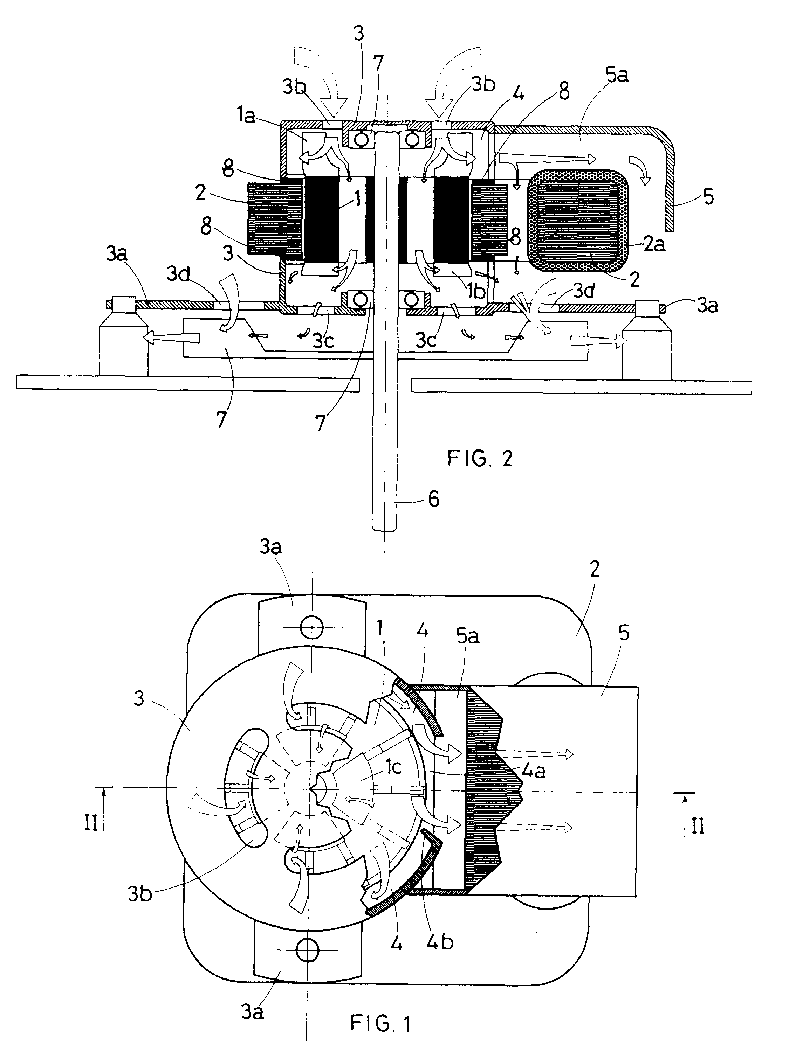

En référence aux figures 1 et 2, on indique les différents parcours effectués par le flux d'air de refroidissement qui cingle le petit moteur selon l'idée.

Les petites pales radiales (la) attirent l'air de l'exterieur à l'interieur du boîtier (3) par le biais des fentes (3b) prévues à cet effet en correspondance de la paroi de fond supérieure de ce dernier.

Une partie de l'air aspiré par les petites pales radiales (1a) est centrifugé dans le conduit annulaire (4) qui décharge ledit air dans le canal (5a) délimité par le couvercle en forme de boite (5), qui à son tour le canalise et l'envoie sur le dispositif d'enroulement (2a) du stator (2).

La portion restante de l'air aspiré par les petites pales radiales (1a) s'engage dans les conduits (1c) qui traversent longitudinalement le corps du rotor (1); l'air étant aspiré par l'action aspirante effectuée par les petites pales radiales (1b) situées en-dessous du stator (1).

L'air qui sort de ces conduits (lc) cingle le roulement à billes inférieur qui supporte le petit arbre (6) et ressort à l'externe du boîtier (3), à travers les fentes (3c) prévues à cet effet sur la bride (3a); l'air étant aspiré par l'hélice d'aspiration (7), située immédiatement en dessous de la bride (3a).

D'autre part, il en est de même en ce qui concerne le courant d'air qui cingle le dispositif d'enroulement (2a) du stator (2), ledit courant étant aspiré vers le bas par l'hélice d'aspiration (7); cet air est propulsé à l'exterieur de la bride (3a) en passant à travers les fentes périphériques (3d) prévues sur la bride (3d) sur laquelle se déverse également l'air qui filtre sous le couvercle (5) et qui frôle, sur la partie inférieure, le dispositif d'enroulement (2a) du stator (2).

Finalement, on souligne le fait que les gaines réalisées en isolant thermique (8) intercalées entre le stator (2) et le boîtier (3) ont le but de créer un pont thermique entre le stator et les sièges des roulements à billes.

## Revendications

1. Petit moteur électrique à induction, refroidi par un flux d'air passant à travers le rotor, du type comprenant un stator annulaire (2) avec enroulement inducteur (2a), une hélice d'aspiration (7) fixée sur un arbre (6), un rotor (1) doté d'une série passante de conduits longitudinaux (1c) et pourvu sur sa partie supérieure et inférieure d'une série annulaire de pales radiales aspirantes (1a et 1b), d'un boîtier (3) contenant le rotor (1) et présentant, sur ses propres fonds, des fentes (3b et 3c), caractérisé en ce que ledit boîtier cylindrique (3) formé de deux demi-coques circulaires a un diamètre de façon à créer, autour de chaque série de pales radiales (1a et 1b), un conduit annulaire de section constante; le conduit annulaire (4) qui entoure la série supérieure de pales radiales (la) débouche dans un canal (5a), délimité par un couvercle en forme de boîte (5) qui enveloppe partiellement l'enroulement (2a) du stator (2); ledit conduit annulaire (4) soit bouché par une cloison transversale (4b) située immédiatement en aval de son embouchure de sortie (4a).

2. Petit moteur électrique à induction, selon la revendication précédente, caractérisé en ce que les deux séries de pales radiales (1a et 1b) sont réalisées en façonnant de manière opportune le paquet de lamelles qui constitue le corps du rotor (1).

## Claims

1. An electric induction motor cooled by an air flow passing through the rotor of the type including an annular stator (2) with inductor winding (2a), a suction fan (7) fixed on the shaft (6), a rotor (1) provided with a series of longitudinal ducts (1c) and at the top and at the bottom with an annular series of radial suction blades (1a and 1b), a casing (3) housing the rotor (1) and provided on its bottom with slots (3b and 3c) characterised in that said cylindrical casing (3) consists of two semi-cylindrical shells and a diameter designed to create around each series of radial blades (1a and 1b) an annular duct with constant cross-section; the annular duct (4) which surrounds the top series of radial blades (1a) entering a channel (5a) delimited by a box-shaped lid (5) in part covering the winding (2a) of the stator (2); said annular duct (4) being obstructed by a transverse baffle plate (4b) positioned downstream from its exit mouth (4a).

2. An electric induction motor according to the previous claim characterised in that the two series of radial blades (1a and 1b) are obtained by shaping the lamellar unit constituting the body of the rotor (1).

## Patentansprüche

1. Elektroinduktionsmotor, gekühlt durch einen durch den Läufer fließenden Luftstrom, bestehend aus einem ringförmigen Ständer (2) mit Induktionswicklung (2a), einem an der Welle (6) befestigten Ansaugrad (7), einem Läufer (1), der eine durchgehende Serie von Längskanälen (1c) besitzt und oben und unten mit einer ringförmigen Serie von radialen Ansaugschaufeln (1a und 1b) ausgestattet ist, einem Gehäuse (3), in dem sich der Läufer (1) befindet und dessen Böden Längsschlitze (3b und 3c) enthalten, dadurch gekennzeichnet, daß besagtes zylindrische Gehäuse (3) aus zwei halbzylindrischen Schalen geformt ist und einen derartigen Durchmesser besitzt, daß sich vollständig um jede Serie von radialen Schaufeln herum (1a und 1b) ein ringförmiger Kanal von konstantem Querschnitt bildet; der ringförmige, die obere Serie von radialen Schaufeln (1a) umgebende Kanal (4), mündet in einen Kanal (5a), der durch einen kastenförmigen Deckel (5) begrenzt ist, welcher teilweise die Wicklung (2a) des Ständers (2) umgibt: besagter ringförmiger Kanal (4) ist durch eine Quertrennwand (4b) unterbrochen, die sich unmittelbar unterhalb seiner Ausgangsmündung (4a) befindet.

2. Elektroinduktionsmotor, nach vorhergehendem Anspruch dadurch gekennzeichnet, daß die beiden radialen Schaufelserien (1a und 1b) dadurch herausgearbeitet wurden, daß man das lamellenförmige Paket, aus dem der Körper des Läufers (1) besteht, in geeigneter Weise geformt hat.
